# EUROPÄISCHE PATENTSCHRIFT

(11) **EP 3 798 068 B1**
(45) Veröffentlichungstag und Bekanntmachung des Hinweises auf die Patenterteilung: **19.04.2023**
(21) Anmeldenummer: 20196833.6
(22) Anmeldetag: 18.09.2020
(51) Int. Cl.: B60S 1/34

(54) **WISCHERVORRICHTUNG, SOWIE VERFAHREN ZUM HERSTELLEN EINER WISCHERVORRICHTUNG**
WIPER DEVICE AND METHOD FOR MANUFACTURING A WIPER DEVICE
DISPOSITIF ESSUIE-GLACE AINSI QUE PROCÉDÉ DE FABRICATION D'UN DISPOSITIF ESSUIE-GLACE

(30) Priorität: 24.09.2019 DE 102019214528
(43) Veröffentlichungstag der Anmeldung: 31.03.2021
(73) Patentinhaber: Robert Bosch GmbH, 70442 Stuttgart (DE)
(72) Erfinder: Pjescic, Ilja, 11070 Belgrad (RS); Rankovic, Sinisa, 11272 Dobanovci (RS); Vuletic, Darko, 15350 Bogatic, Serbia (RS); Mrakovic, Nemanja, 22300 Stara Pazova (RS)

(56) Entgegenhaltungen:
- EP-A2- 2 361 811
- WO-A1-2005/044647
- WO-A1-2007/144069
- DE-A1-102010 042 374
- DE-A1-102010 044 100
- DE-A1-102010 062 320
- DE-A1-102016 218 645
- DE-C1- 4 229 496
- FR-A1- 3 063 315

## Beschreibung

Die vorliegende Erfindung betrifft eine Wischervorrichtung, insbesondere Scheibenwischervorrichtung, mit einer in einer Lagerbuchse drehbar aufgenommenen Wischerwelle und mit einem Positionierungselement, welches dazu vorgesehen ist die Position der Wischerwelle in der Lagerbuchse zu sichern.

### Stand der Technik

Es sind Wischervorrichtungen bekannt, die eine Lagerbuchse aufweisen in die eine Wischerwelle eingebracht ist. Dabei wird die Wischerwelle durch ein Positionierungselement in der Lagerbuchse axial positioniert. DE-A-10 2010 062 320 offenbart den Oberbegriff den Ansprüchen 1 und 2.

### Offenbarung der Erfindung

Die vorliegende Erfindung mit den Merkmalen des Hauptanspruchs hat demgegenüber den Vorteil, dass das Positionierungselement aus einem nicht-metallischen Material gebildet ist, wodurch die Herstellungskosten reduziert und verschiedene Ausführungen des Positionierungselements mit verbesserter Funktionalität realisiert werden können.

So ist es vorteilhaft, wenn das Positionierungselement aus einem, insbesondere amorphen, thermoplastischen Kunststoff gebildet ist, wodurch vorteilhafte Möglichkeiten der Anbringung, beispielsweise an die Wischerwelle, geschaffen werden.

Vorteilhaft ist es auch, wenn das Positionierungselement zumindest eine Erhebung aufweist, welche dazu vorgesehen ist Toleranzen in der Positionierung der Wischerwelle in der Lagerbuchse zu kompensieren. Dadurch wird eine präzisere Positionierung der Wischerwelle in der Lagerbuchse ermöglicht.

Vorteilhaft ist es auch, wenn zusätzlich zum Positionierungselement ein Ausgleichselement angeordnet ist, welches dazu vorgesehen ist Toleranzen in der Positionierung der Wischerwelle in der Lagerbuchse zu kompensieren, wodurch ebenfalls eine präzisere Positionierung der Wischerwelle in der Lagerbuchse ermöglicht.

Von Vorteil ist es auch, wenn das Positionierungselement zweiteilig ausgebildet ist, wodurch eine einfachere Montage ermöglicht wird.

Auch ist es von Vorteil, wenn am Positionierungselement eine zahnartige Struktur ausgebildet ist, wodurch eine bessere Verbindung des Positionierungselements zu der Wischerwelle ermöglicht wird.

Von Vorteil ist es auch, wenn das Positionierungselement durch Crimpen an der Wischerwelle befestigt ist, wodurch ebenfalls eine bessere Verbindung des Positionierungselements zur Wischerwelle ermöglicht wird.

Ebenso ist es von Vorteil, wenn das Positionierungselement kraftschlüssig an der Wischerwelle befestigt ist, wodurch ebenfalls eine bessere Verbindung des Positionierungselements zu der Wischerwelle ermöglicht wird.

Außerdem ist es vorteilhaft, wenn das Positionierungselement durch Kleben an der Wischerwelle befestigt ist, wodurch ebenfalls eine bessere Verbindung des Positionierungselements zu der Wischerwelle ermöglicht wird.

Vorteilhaft ist es auch, wenn an der Wischerwelle eine aufgeraute Struktur ausgebildet ist, wodurch ebenfalls eine bessere Verbindung des Positionierungselements zu der Wischerwelle ermöglicht wird.

Ebenso ist es vorteilhaft, wenn an der Wischerwelle eine zahnartige Struktur ausgebildet ist, wodurch ebenfalls eine bessere Verbindung des Positionierungselements zu der Wischerwelle ermöglicht wird.

Nach der Erfindung weist die Wischerwelle eine Ummantelung aus einem nicht-metallischen Material, insbesondere einem Polymermaterial, vorzugsweise Kunststoff, auf, wodurch ebenfalls eine bessere Verbindung des Positionierungselements zu der Wischerwelle ermöglicht wird.

Die Erfindung betrifft auch ein Verfahren zur Herstellung einer Wischervorrichtung, insbesondere einer Wischervorrichtung nach der vorhergehenden Beschreibung, mit einer in einer Lagerbuchse drehbar aufgenommenen Wischerwelle und mit einem Positionierungselement, welches dazu vorgesehen ist die Position der Wischerwelle in der Lagerbuchse zu sichern. Das Verfahren hat den Vorteil, dass das Positionierungselement aus Kunststoff gebildet wird, wodurch die Herstellungskosten reduziert und verschiedene Ausführungen des Positionierungselements mit verbesserter Funktionalität realisiert werden können.

Vorteilhaft ist es, wenn das Positionierungselement, insbesondere mittels eines Heizelements, an die Wischerwelle angeschrumpft wird, wodurch die Herstellung vereinfacht wird.

Vorteilhaft ist es auch, wenn das Positionierungselement an die Wischerwelle gecrimpt wird, wodurch ebenfalls die Herstellung vereinfach wird.

Auch ist es vorteilhaft, wenn das Positionierungselement auf die Wischerwelle, insbesondere axial, aufgepresst wird, wodurch ebenfalls die Herstellung vereinfach wird.

Außerdem ist es vorteilhaft, wenn das Positionierungselement an die Wischerwelle adhäsiv verbunden, insbesondere geklebt, wird, wodurch ebenfalls die Herstellung vereinfacht wird.

### Zeichnungen

In den Zeichnungen sind Ausführungsbeispiele der Erfindung schematisch dargestellt und in der nachfolgenden Beschreibung näher erläutert. Es zeigen
- Fig. 1: eine schematische Darstellung eines Ausführungsbeispiels einer Wischervorrichtung in einem Kraftfahrzeug,
- Fig. 2: eine perspektivische Darstellung eines Ausführungsbeispiels einer Wischervorrichtung,
- Fig. 3: eine Explosionsdarstellung einer Wischerwelle mit einer Lagerbuchse,
- Fig. 4: eine Explosionsdarstellung einer Wischerwelle mit einer Lagerbuchse,
- Fig. 5: einen schematischen Querschnitt einer Wischerwelle in einer Lagerbuchse,
- Fig. 6: einen schematischen Querschnitt einer Wischerwelle in einer Lagerbuchse,
- Fig. 7: eine schematisch und vereinfacht dargestellte Abfolge zur Anbringung eines Positionierungselements an eine Wischerwelle
- Fig. 8: einen schematischen Querschnitt einer Wischerwelle in einer Lagerbuchse,
- Fig. 9: einen schematischen Querschnitt einer Wischerwelle in einer Lagerbuchse,
- Fig. 10: einen schematischen Querschnitt einer Wischerwelle in einer Lagerbuchse,
- Fig. 11: einen schematischen Querschnitt einer Wischerwelle in einer Lagerbuchse,
- Fig. 12: eine schematische Draufsicht eines Positionselements,
- Fig. 13: einen schematischen Querschnitt und eine schematische Draufsicht einer Wischerwelle und eines Positionierungselements,
- Fig. 14: einen schematischen Querschnitt einer Wischerwelle in einer Lagerbuchse,
- Fig. 15: einen schematischen Querschnitt einer Wischerwelle in einer Lagerbuchse,
- Fig. 16: einen schematischen Querschnitt einer Wischerwelle in einer Lagerbuchse,
- Fig. 17: einen schematischen Querschnitt einer Wischerwelle in einer Lagerbuchse,
- Fig. 18: einen schematischen Querschnitt einer Wischerwelle und eines Positionierungselements
- Fig. 19: einen schematischen Querschnitt einer Wischerwelle und eines Positionierungselements,
- Fig. 20: einen schematischen Querschnitt eines Ausführungsbeispiels einer Wischerwelle in einer Lagerbuchse,
- Fig. 21: einen schematischen Querschnitt eines weiteren Ausführungsbeispiels einer Wischerwelle in einer Lagerbuchse.

### Beschreibung der Ausführungsbeispiele

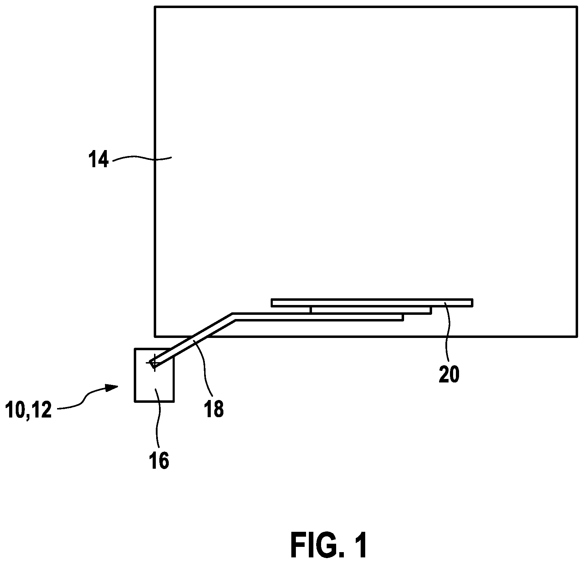

In Fig. 1 ist eine schematische Darstellung eines Ausführungsbeispiels einer Wischervorrichtung 10, im vorliegenden Fall einer Scheibenwischervorrichtung 12, für ein Kraftfahrzeug gezeigt, über die eine Fahrzeugscheibe 14, bei der es sich um eine Frontscheibe oder eine Heckscheibe handeln kann, gereinigt werden kann. Die Wischervorrichtung 10 umfasst eine Antriebseinrichtung 16, die einen Wischerarm 18 in eine pendelnde Drehbewegung versetzt, wobei der Wischerarm 18 ein Wischerblatt 20 trägt, das auf der Fahrzeugscheibe 14 aufliegt. Die Antriebseinrichtung 16 umfasst einen elektrischen Antriebsmotor sowie ein Getriebe mit einer Wischerwelle, mit der der Wischerarm 18 gekoppelt ist. Der Motor versetzt über das Getriebe die Wischerwelle in die Drehpendelbewegung, welche auch von dem Wischarm 18 einschließlich Wischerblatt 20 ausgeführt wird.

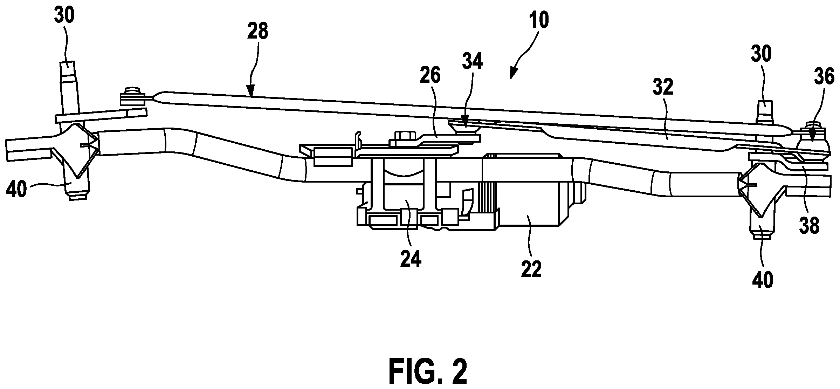

In Fig. 2 ist eine perspektivische Darstellung eines Ausführungsbeispiels einer Wischervorrichtung 10 gezeigt. Gemäß Fig. 2 weist die Wischervorrichtung 10 einen elektrischen Antriebsmotor 22 auf, dem ein Getriebe 24 zur Bewegungsuntersetzung nachgeordnet ist, wobei das Getriebe 24 eine Motorkurbel 26 antreibt, die mit einem Wischergestänge 28 gekoppelt ist. Das Wischergestänge 28 versetzt zwei Wischerwellen 30, auf die jeweils ein Wischblatt 20 aufsetzbar ist, in die pendelnde Drehbewegung. Teil des Wischer- bzw. Kurbelgestänges 28 ist eine Gelenkstange 32, die im Bereich beider Stirnseiten über Gelenke 34 bzw. 36 mit der Motorkurbel 26 bzw. einer Wischerkurbel 38 gekoppelt ist, welche anderen Endes mit der Wischerwelle 10 verbunden ist.

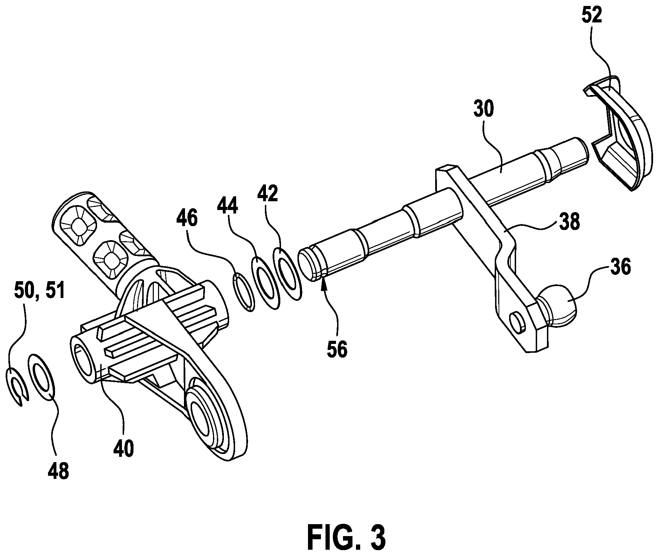

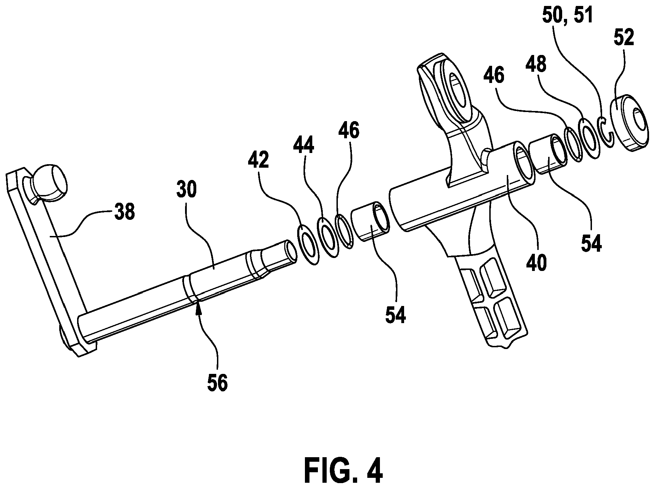

Die Wischerwellen 30 sind jeweils in einer Lagerbuchse 40 drehbar aufgenommen. Entsprechend ist in Fig. 3 und 4 jeweils eine Explosionsdarstellung einer Wischerwelle 30 mit einer Lagerbuchse 40 gezeigt. In Fig. 3 ist dabei, entsprechend Fig. 2, ein Beispiel einer Wischerwelle 30 mit einer Lagerbuchse 40 gezeigt, bei dem die Wischerkurbel 38 an der Wischerwelle 40 an einer dem Wischerarm 18 zugewandten Seite der Lagerbuchse 40, bzw. einer Frontseite, angeordnet ist. In Fig. 4 wiederum ist ein weiteres Beispiel einer Wischerwelle 30 mit einer Lagerbuchse 40 gezeigt, bei der die Wischerkurbel 38 an der Wischerwelle 40 an einer dem Wischerarm 18 abgewandten Seite der Lagerbuchse 40, bzw. einer Rückseite, angeordnet ist. In beiden Varianten weisen die Anordnungen jeweils eine Federscheibe 42, eine Druckscheibe 44, einen O-Ring 46, eine Unterlagscheibe 48, ein Positionierungselement 50 und eine Abdeckkappe 52 auf. Je nach Variante unterscheidet sich dabei die Reihenfolge der Anordnung der einzelnen Bauteile gemäß den Fig. 3 und 4, wobei die zweite Variante aus Fig. 4, im Vergleich zur ersten Variante aus Fig. 3, zwei O-Ringe 46 und zusätzliche zwei Buchsen 54 aufweist.

Sowohl im Fig. 3, als auch im Fig. 4, wird die Wischerwelle 30 in die Lagerbuchse 40 drehbar angeordnet, wobei das Positionierungselement 50 dazu vorgesehen ist die Wischerwelle 30 gegenüber der Lagerbuchse 40 axial zu positionieren. Dazu weist die Wischerwelle in den gezeigten Ausführungsbeispielen jeweils eine umlaufende Nut 56 auf, wobei das Positionierungselement 50 korrespondierend zu der umlaufenden Nut 56, in den vorliegenden Fällen als c-förmiger Clip 58, ausgebildet ist. Die umlaufende Nut 56 ist in den gezeigten Fällen jeweils auf einer von der Wischerkurbel 38 abgewandten Seite an der Wischerwelle 30 ausgebildet. So wird in den gezeigten Ausführungsbeispielen die Wischerwelle 30 in die Lagerbuchse 40 bis zum Anschlag an die Wischerkurbel 38 eingeführt und der c-förmige Clip 51 lateral in die umlaufende Nut 56 eingeclipst. Entsprechend ist dann die Lagebuchse zwischen dem c-förmigen Clip 51 und der Wischerkurbel 38 angeordnet, wodurch wiederum die Wischerwelle 30 in axialer Richtung gegenüber der Lagerbuchse 40 positioniert ist.

Die vorliegenden Beispielen haben nun den Vorteil, dass das das Positionierungselement 50 aus einem nicht-metallischen Material gebildet ist. Dadurch können die Herstellungskosten reduziert und verschiedene Ausführungen des Positionierungselements 50 mit verbesserter Funktionalität realisiert werden. In den vorliegenden Fällen ist das Positionierungselement 50 aus einem Polymermaterial, insbesondere aus Kunststoff, gebildet.

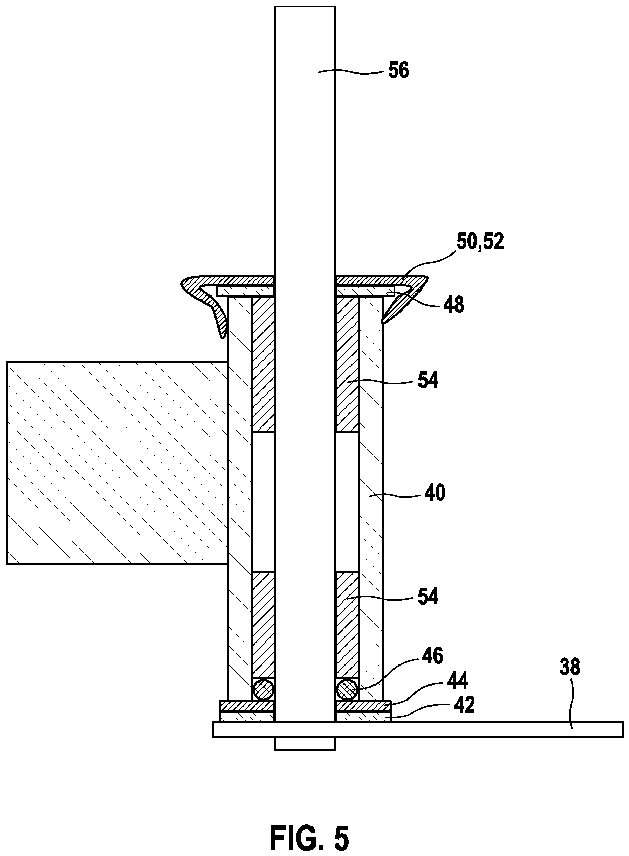

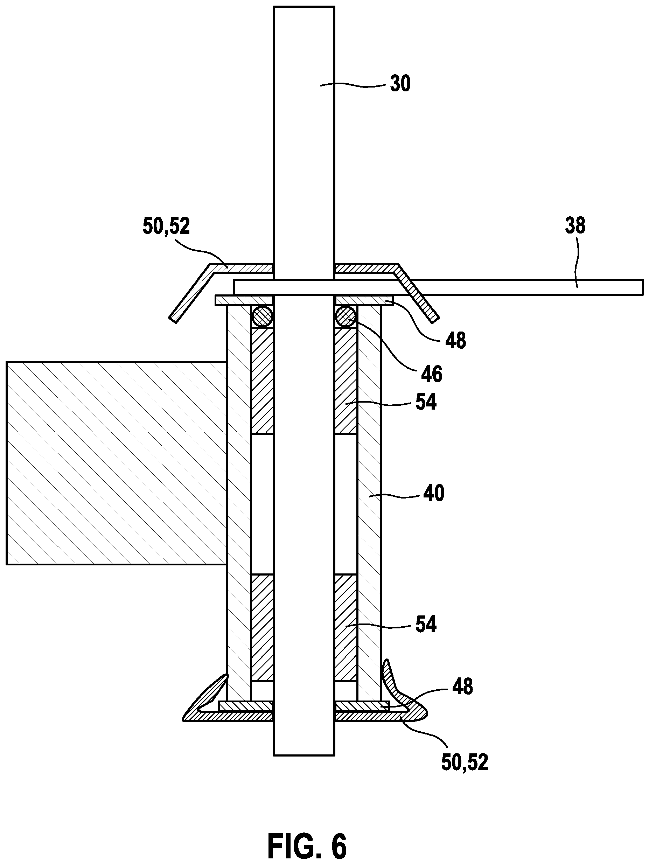

In Fig. 5 und 6 ist ein schematischer Querschnitt zweier Beispiele einer Wischerwelle 30 in einer Lagerbuchse 40 gezeigt. Das Positionierungselement 50 ist dabei aus einem, im vorliegenden Fall amorphen, thermoplastischen Kunststoff gebildet ist, wodurch das Positionselement 50 besonders vorteilhaft an die Wischerwelle oder die Lagerbuchse angebracht werden kann. In den vorliegenden Fällen wird das Positionierungselement, insbesondere mittels eines Heizelements 58, an die Wischerwelle angeschrumpft wird. In den gezeigten Ausführungsbeispielen wird durch den thermoplastischen Kunststoff zudem ermöglicht, dass das Positionierungselement 50 sowohl als Positionierungselement 50 als auch als Abdeckkappe 52 fungiert, wodurch wiederum die Teilevielfalt reduziert wird und zugleich die Gesamtanordnung vor Korrosion geschützt wird.

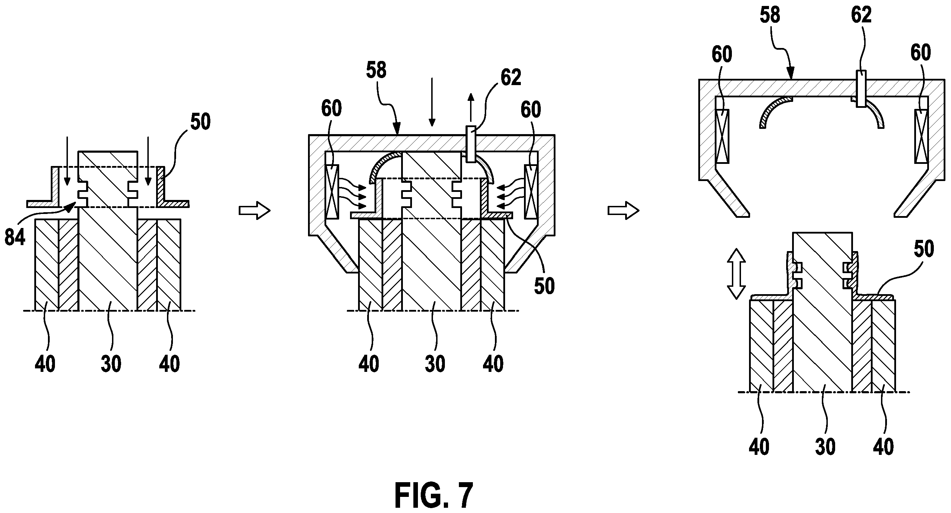

In Fig. 7 ist entsprechend ein schematisch und vereinfacht dargestellte Abfolge zur Anbringung eines Positionierungselements 50 an eine Wischerwelle gezeigt. In einem ersten Schritt wird dabei ein Positionierungselement 50 aus, im vorliegenden Fall amorphem, thermoplastischem Kunststoff an der Wischerwelle 30 und der Lagerbuchse 40 positioniert. Im gezeigten Fall wird ein ringförmiges Positionierungselement 50 auf die Wischerwelle 30 geschoben, bis es an der Lagerbuchse 40 anschlägt. Das Positionierungselement 50 umgibt dabei die Wischerwelle 30. In einem zweiten Schritt wird dann eine Vorrichtung 58 zum Anschrumpfen des Positionierungselements 50 derart positioniert, dass ein Heizelement 60 das Positionierungselement 50 mit Wärme bestrahlen kann. In einem dritten Schritt wird dann mittels eines Absaugelements 62 Luft aus dem Zwischenraum zwischen dem Positionierungselement 50 und der Wischerwelle 30 abgesaugt und gleichzeitig das Positionierungselement 50 mittels des Heizelements 60 erwärmt. Durch das Erwärmen des Heizelements 60 wird das Positionierungselement 50 an die Wischerwelle 30 angeschrupft.

In einem vierten Schritt wird dann die Vorrichtung 58 zum Anschrumpfen des Positionierungselements 50 entfernt.

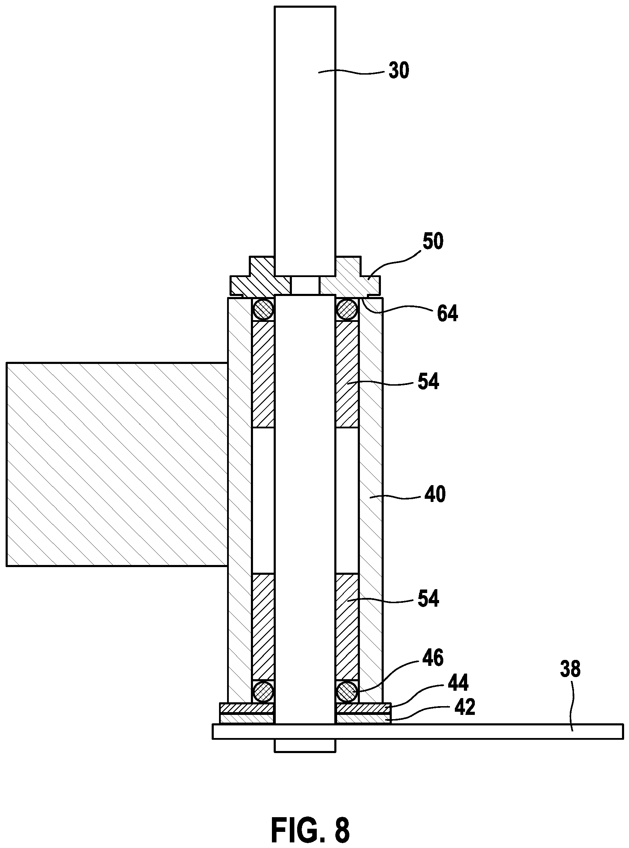

In Fig. 8 ist ein schematischer Querschnitt einer Wischerwelle in einer Lagerbuchse gezeigt. Das Positionierungselement 50 zumindest eine Erhebung 64 auf, welche dazu vorgesehen ist Toleranzen in der Positionierung der Wischerwelle 30 in, bzw. gegenüber, der Lagerbuchse 40 zu kompensieren. Dadurch wird eine präzisere Positionierung der Wischerwelle 30 in der Lagerbuchse 40 ermöglicht. Darüber hinaus kann dadurch auf die Verwendung weiterer, Toleranzen ausgleichender Bauteile, wie die der Unterlagsscheibe 48 (vgl. Fig. 3 und 4), verzichtet werden, wodurch wiederum die Teilevielfalt reduziert wird.

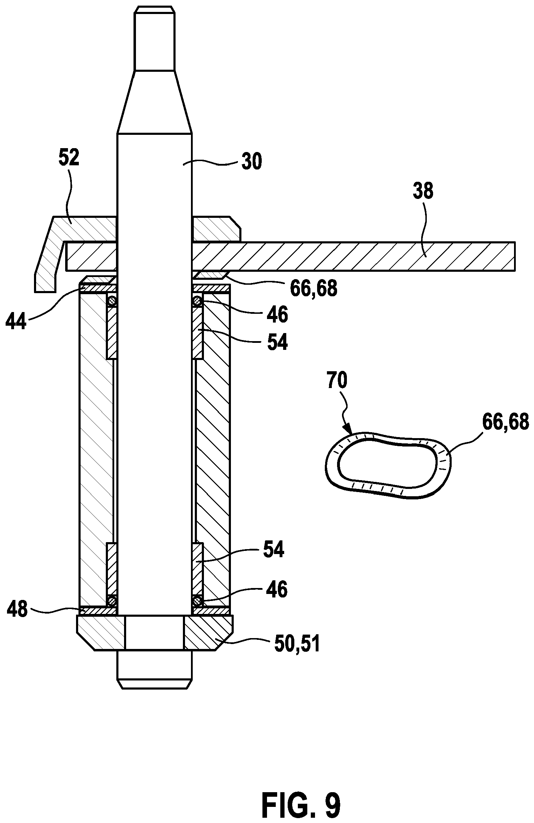

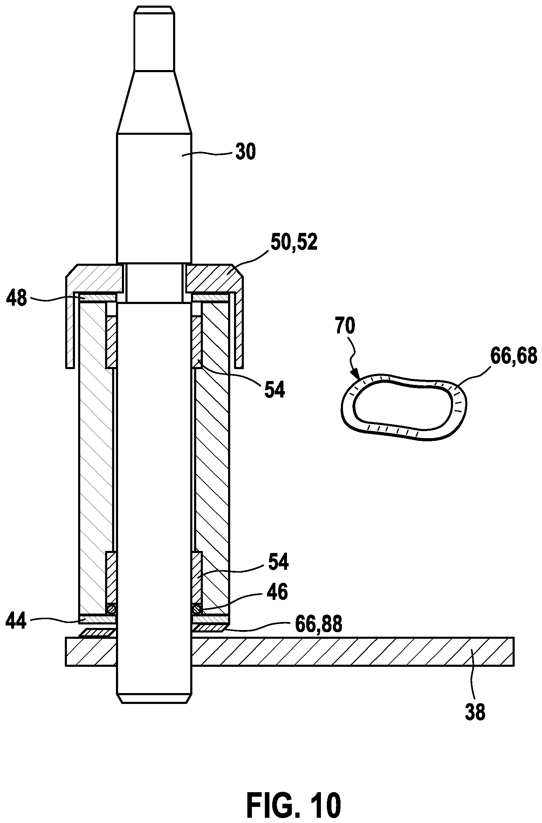

In Fig. 9 und 10 ist jeweils ein schematischer Querschnitt einer Wischerwelle 30 in einer Lagerbuchse 40 gezeigt. In den gezeigten Fällen ist zusätzlich zum Positionierungselement 50 ein Ausgleichselement 66 angeordnet, welches dazu vorgesehen ist Toleranzen in der Positionierung der Wischerwelle 30 in der Lagerbuchse 40 zu kompensieren. Dadurch kann ebenfalls eine präzisere Positionierung der Wischerwelle 30 in der Lagerbuchse 40 ermöglicht werden. In dem vorliegenden Fall handelt es sich bei dem Ausgleichselement 66 um eine Wellenscheibe 68, die ebenfalls in Fig. 3 und 10 gezeigt ist. Die Ausgleichselement 66, bzw. die Wellenscheibe 68, ersetzt in den vorliegenden Fällen die Federscheibe 42 (vgl. Fig. 3 und 4) und hat demgegenüber den Vorteil, dass die Wellenscheibe je nach Bedarf für den Toleranzausgleich eine andere Höhe der geformten Wellenberge 70 aufweisen kann. In den gezeigten Fällen wird währen der Herstellung je nach Bedarf für den Toleranzausgleich zischen drei Wellenscheiben 68 mit unterschiedlichen Höhen, von 1 mm, 1,2 mm und 1,4 mm, entschieden, welche Wellenscheibe 68 eingesetzt werden soll. Dies erhöht die Flexibilität bei der Herstellung und sorgt zugleich für einen verbesserten Toleranzausgleich.

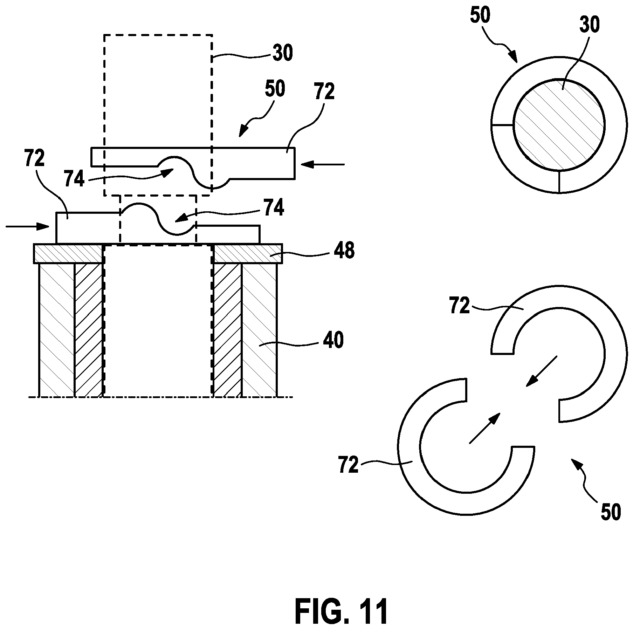

In Fig. 11 ist ein schematischer Querschnitt einer Wischerwelle 30 in einer Lagerbuchse 40 gezeigt. Dabei ist das Positionierungselement 50 zweiteilig ausgebildet, wodurch eine vereinfachte und stabilere Montage an die Wischerwelle 30 ermöglicht wird. Das Positionierungselement 50 setzt sich im vorliegenden Fall aus zwei c-förmigen Clips 72 zusammen. Diese sind baugleich ausgebildet und weisen, im Unterschied zu den c-förmigen Clips 51 aus Fig. 3 und 4, zueinander korrespondierende Strukturen 74 auf, die bei Montage an die Wischerwelle 30 eine stabile Verbindung ermöglichen.

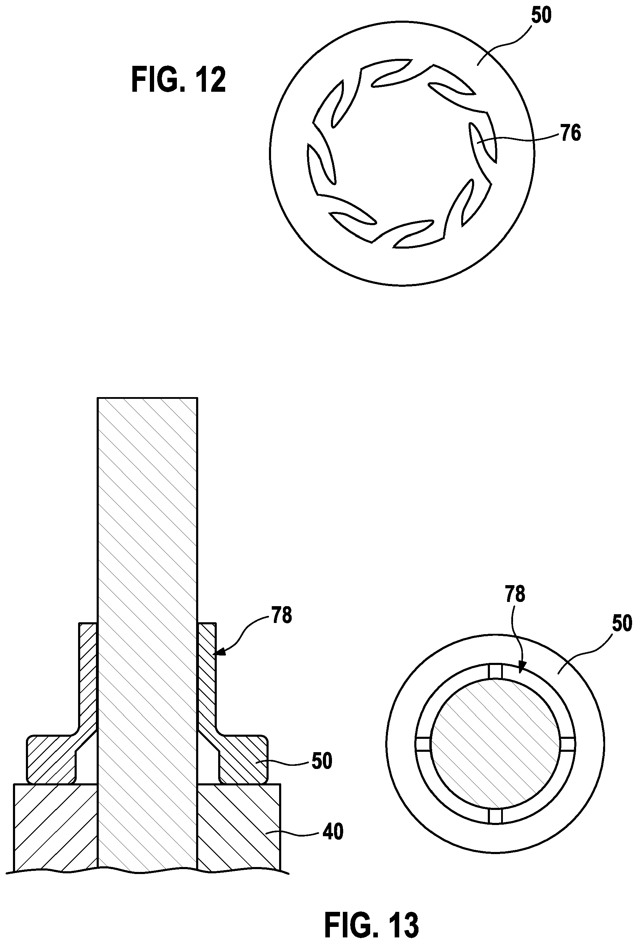

In Fig. 12 ist eine schematische Draufsicht eines Positionselements 50 gezeigt. Das gezeigte Positionierungselement 50 weist eine zahnartige Struktur 76 auf. Dadurch wird bei montiertem Positionierungselement 50 die Reibungskraft zur Wischerwelle 30 erhöht, wodurch eine bessere Verbindung zur Wischerwelle 30 vorliegt.

In Fig. 13 ist ein schematischer Querschnitt und eine schematische einer Wischerwelle 30 und eines Positionierungselements 50 gezeigt. Das vorliegende Positionierungselement 50 ist dabei durch Crimpen an der Wischerwelle 30 befestigt. Unter Crimpen kann beispielsweise Bördeln, Quetschen, Kräuseln oder Falten verstanden werden. Im vorliegenden Fall weist das Positionierungselement 50 Vorsprünge 78 auf. Wenn das Positionierungselement 50 nun axial über die Wischerwelle 30 gestülpt wird, dann werden die Vorsprünge 78 entlang der Wischerwelle 30 verbogen, so dass diese zwischen den Vorsprüngen eingequetscht wird. Dadurch wird eine einfache und schnelle Montage des Positionierungselements 50 ermöglicht und zudem eine verbesserte Verbindung zwischen Positionierungselement 50 und der Wischerwelle 30 realisiert.

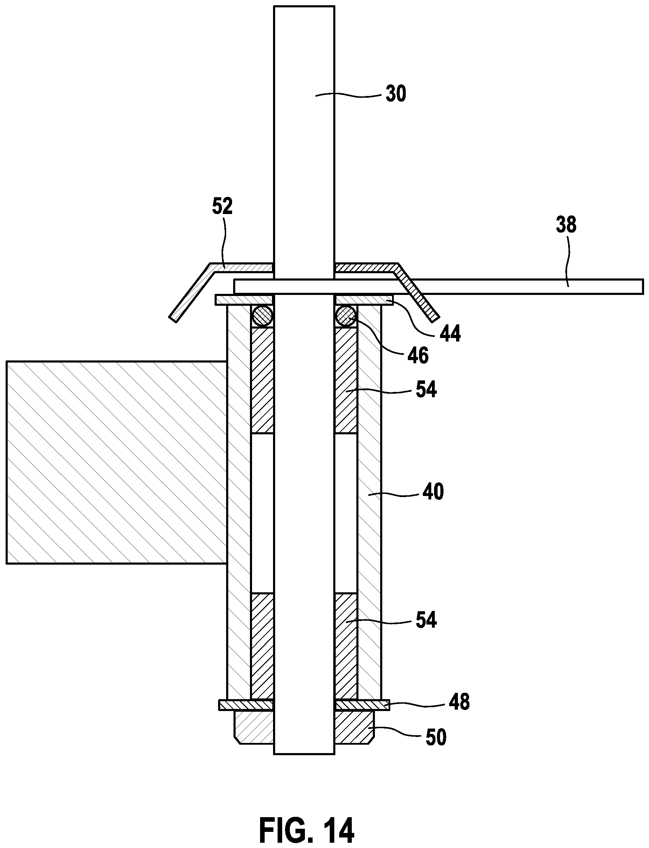

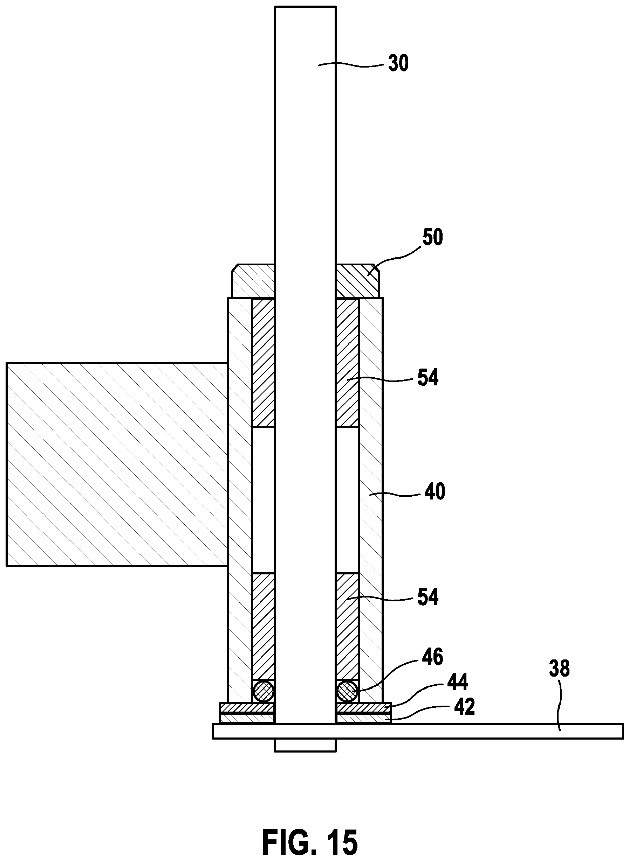

In Fig. 14 und 15 ist jeweils ein schematischer Querschnitt einer Wischerwelle 30 in einer Lagerbuchse 40 gezeigt. In den gezeigten Fällen ist das Positionierungselement 50 kraftschlüssig an der Wischerwelle 30 befestigt. In dem vorliegenden Fall wird dies dadurch erreicht, dass das Positionierungselement 50 auf die Wischerwelle 30 axial aufgepresst wird, wobei der innere Durchmesser des Positionierungselements 50 gleich oder geringer ist als der äußere Durchmesser der Wischerwelle 30. Dadurch wird eine Flächenpressung in den Reibflächen erzeugt, welche gut zur Übertragung großer und wechselnder Momente geeignet ist. Entsprechend wird eine einfache und schnelle Montage des Positionierungselements 50 ermöglicht und zudem eine besonders feste Verbindung zwischen Positionierungselement 50 und der Wischerwelle 30 realisiert. Außerdem werden durch das Aufpressen alle Bauteile axial derart aufeinandergedrückt, dass nur wenige Toleranzen ausgeglichen werden müssen. So kann in den gezeigten Ausführungsbeispielen auf die Federscheibe 42 (vgl. Fig. 3 und 4) verzichtet werden, wodurch wiederum die Teilevielfalt reduziert wird.

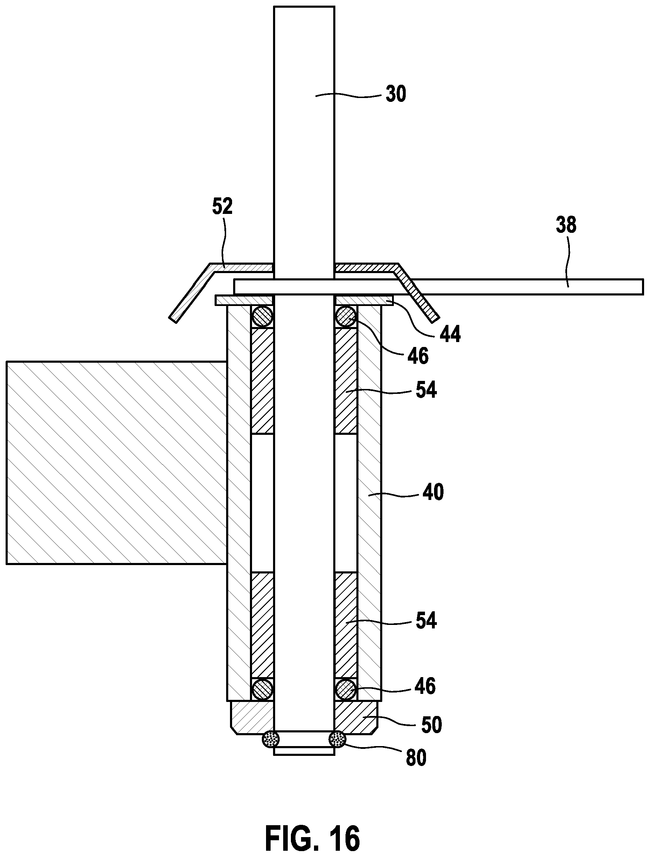

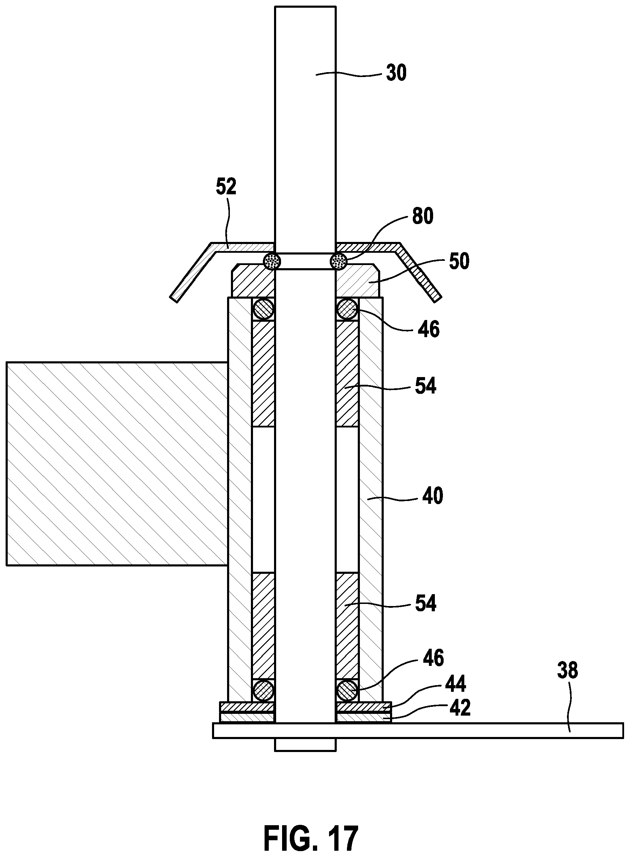

In Fig. 16 und 17 ist jeweils ein schematischer Querschnitt einer Wischerwelle 30 in einer Lagerbuchse 40 gezeigt. In den gezeigten Fällen ist das Positionierungselement 50 durch Kleben an der Wischerwelle 30 befestigt. Dadurch wird eine ebenfalls einfache und schnelle Montage des Positionierungselements 50 ermöglicht und zudem eine verbesserte Verbindung zwischen Positionierungselement 50 und der Wischerwelle 30 realisiert. In dem gezeigten Fällen wurde das Positionierungselement 50 jeweils mittels Klebstoff 80 an einer von der Lagerbuchse 40 abgewandten Seite an die Wischerwelle 30 festgeklebt, wobei der Klebstoff die Wischerwelle 30 umrandet.

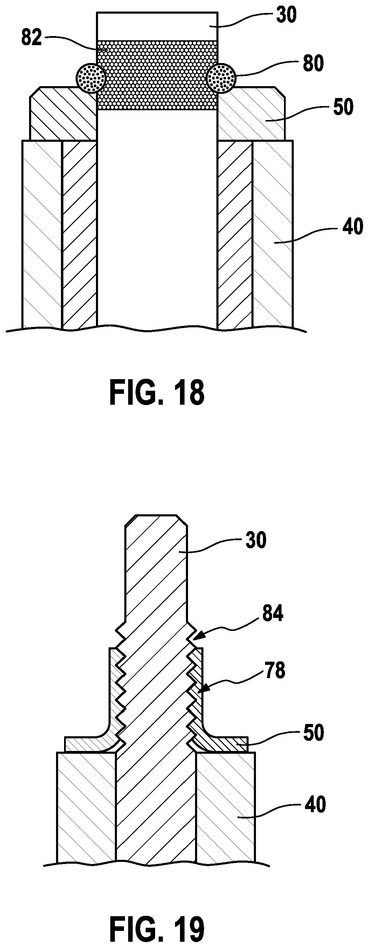

In Fig. 18 ist ein schematischer Querschnitt einer Wischerwelle 30 und eines Positionierungselements 50 gezeigt. In dem gezeigten Fall ist an der Wischerwelle 30 eine aufgeraute, im vorliegenden Fall gerändelte, Struktur 82 ausgebildet. Dadurch wird im Vergleich zu den Ausführungsbeispielen aus Fig. 16 und 17 die Oberfläche der Wischerwelle 30 erhöht, so dass der Klebstoff 80 besser an der Wischerwelle 30 haften kann. Entsprechend wird dadurch die Verbindung zusätzlich verbessert.

In Fig. 19 ist ein schematischer Querschnitt einer Wischerwelle 30 und eines Positionierungselements 50 gezeigt. Auch in diesem Fall ist das Positionierungselement 50 wie auch schon in Fig. 13 durch Crimpen an der Wischerwelle 30 befestigt. Zudem ist nun aber an der Wischerwelle 30 eine zahnartige Struktur 84 ausgebildet, wodurch die Oberfläche der Wischerwelle 30 vergrößert wird und somit auch die Verbindung zwischen dem Positionierungselement 50 und der Wischerwelle 30 verbessert wird. Eine zahnartige Struktur 84 kann dabei wie in dem vorliegenden Fall gezeigten Ausführungsbeispiel aus Fig. 19 zick-zack-artig, bzw. spitz zulaufend, oder wie in dem in Fig. 7 gezeigten Fall rechteckartig ausgebildet sein.

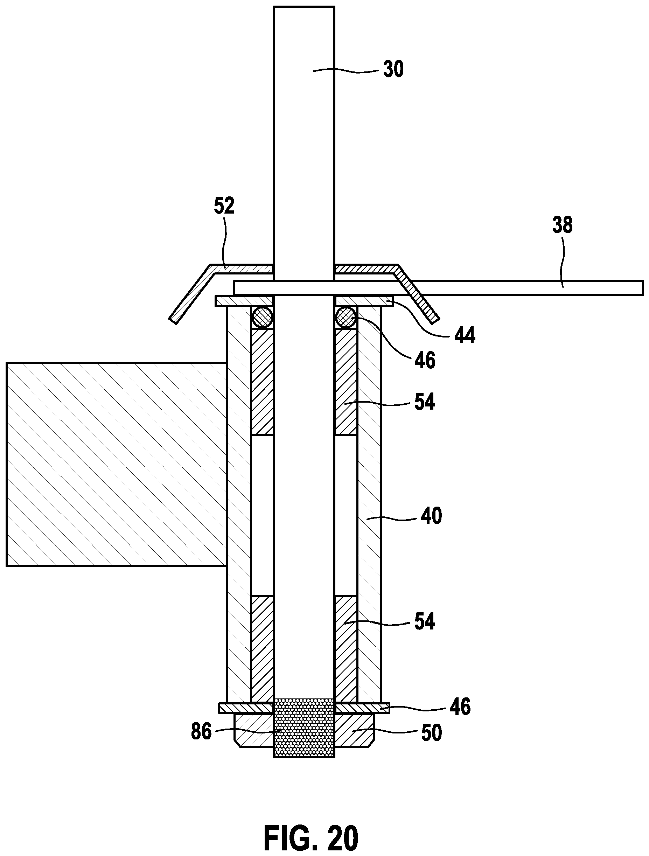

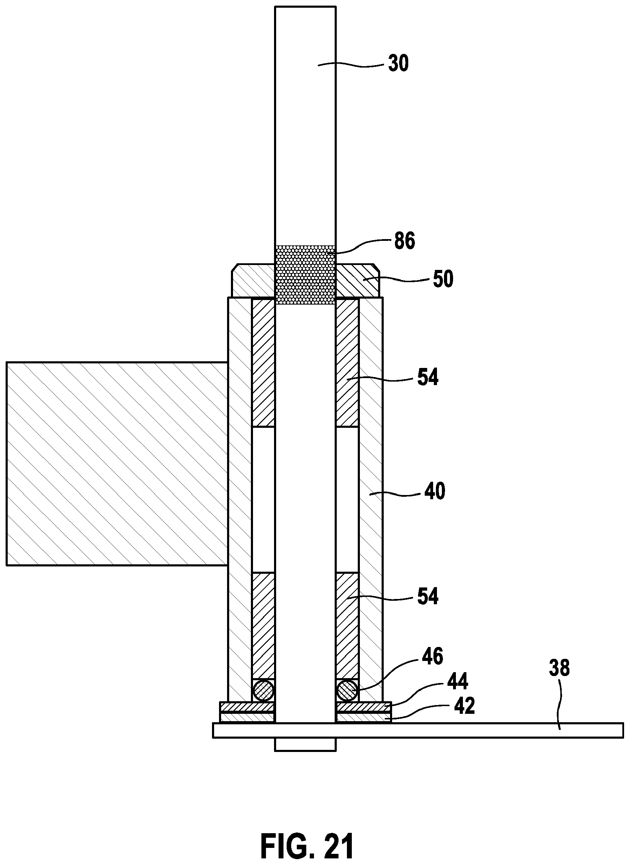

In Fig. 20 und 21 ist jeweils ein schematischer Querschnitt Ausführungsbeispiele einer Wischerwelle 30 in einer Lagerbuchse 40 gezeigt. In den gezeigten Fällen weist die Wischerwelle 30 eine Ummantelung 86 aus einem nicht-metallischen Material, im gezeigten Fall aus einem Polymermaterial, konkret Kunststoff, auf, wodurch wiederum die Verbindung zwischen dem Positionierungselement 50 und der Wischerwelle 30 verbessert wird. Im vorliegenden Fall weist die Ummantelung 86 eine dicke von 10µm oder weniger auf. Sie wird in dem gezeigten Fall aufgegossen, alternativ wäre es aber auch möglich, dass diese aufgestülpt wird. Das Positionierungselement wiederum wird an die Ummantelung 86 der Wischerwelle 30 mittels Ultraschallschweißen angebracht, wodurch eine besonders gute Verbindung zwischen dem Positionierungselement 50 und der Ummantelung 86 und somit auch zu der Wischerwelle 30 entsteht. In dem vorliegenden Fall besteht daher die Ummantelung 86 aus einem Kunststoff welches dazu geeignet ist mittels Ultraschallschweißen verarbeitet zu werden.

Die vorhergehend beschriebenen Ausführungsbeispiele können je nach Bedarf und im Rahmen der fachmännischen Umsetzbarkeit beliebig miteinander kombiniert werden um ein besseres Ergebnis zu erzielen.

## Patentansprüche

1. Wischervorrichtung (10), insbesondere Scheibenwischervorrichtung (12), mit einer in einer Lagerbuchse (40) drehbar aufgenommenen Wischerwelle (30) und mit einem Positionierungselement (50), welches dazu vorgesehen ist die Position der Wischerwelle (30) in der Lagerbuchse (40) zu sichern, wobei das Positionierungselement (50) aus einem nicht-metallischen Material gebildet ist, **dadurch gekennzeichnet, dass** die Wischerwelle (30) eine Ummantelung (86) aus einem nicht-metallischen Material, insbesondere einem Polymermaterial, vorzugsweise Kunststoff, aufweist und das Positionierungselement (50) an der Ummantelung (86) der Wischerwelle (30), mittels Ultraschallschweißen angebracht ist.

2. Verfahren zur Herstellung einer Wischervorrichtung (10), insbesondere einer Wischervorrichtung (10) nach einem der vorhergehenden Ansprüche, mit einer in einer Lagerbuchse (40) drehbar aufgenommenen Wischerwelle (30) und mit einem Positionierungselement (50), welches dazu vorgesehen ist die Position der Wischerwelle (30) in der Lagerbuchse (40) zu sichern, wobei das Positionierungselement (50) aus Kunststoff gebildet wird, **dadurch gekennzeichnet, dass** die Wischerwelle (30) eine Ummantelung (86) aus einem nicht-metallischen Material, insbesondere einem Polymermaterial, vorzugsweise Kunststoff, aufweist und das Positionierungselement (50) an die Ummantelung (86) der Wischerwelle (30), mittels Ultraschallschweißen angebracht wird.

## Claims

1. Wiper device (10), in particular windscreen-wiper device (12), having a wiper shaft (30), which is accommodated in a rotatable manner in a bearing bush (40), and having a positioning element (50), which is provided to secure the position of the wiper shaft (30) in the bearing bush (40), wherein the positioning element (50) is formed from a non-metallic material, **characterized in that** the wiper shaft (30) has a sheath (86) made of a non-metallic material, in particular made of a polymer material, preferably plastic, and the positioning element (50) is fitted on the sheath (86) of the wiper shaft (30) by means of ultrasonic welding.

2. Method for producing a wiper device (10), in particular a wiper device (10) according to one of the preceding claims, having a wiper shaft (30), which is accommodated in a rotatable manner in a bearing bush (40), and having a positioning element (50), which is provided to secure the position of the wiper shaft (30) in the bearing bush (40), wherein the positioning element (50) is formed from plastic, **characterized in that** the wiper shaft (30) has a sheath (86) made of a non-metallic material, in particular made of a polymer material, preferably plastic, and the positioning element (50) is fitted onto the sheath (86) of the wiper shaft (30) by means of ultrasonic welding.

## Revendications

1. Dispositif d'essuie-glace (10), notamment dispositif d'essuie-glace de vitre (12), avec un arbre d'essuie-glace (30) logé de manière rotative dans un coussinet (40) et avec un élément de positionnement (50) qui est prévu pour bloquer la position de l'arbre d'essuie-glace (30) dans le coussinet (40), l'élément de positionnement (50) étant formé en un matériau non métallique, **caractérisé en ce que** l'arbre d'essuie-glace (30) présente une enveloppe (86) en un matériau non métallique, notamment en un matériau polymère, de préférence en matière plastique, et l'élément de positionnement (50) est fixé à l'enveloppe (86) de l'arbre d'essuie-glace (30) au moyen d'un soudage par ultrasons.

2. Procédé de fabrication d'un dispositif d'essuie-glace (10), notamment d'un dispositif d'essuie-glace (10) selon l'une quelconque des revendications précédentes, avec un arbre d'essuie-glace (30) logé de manière rotative dans un coussinet (40) et avec un élément de positionnement (50) qui est prévu pour bloquer la position de l'arbre d'essuie-glace (30) dans le coussinet (40), l'élément de positionnement (50) étant formé en matière plastique, **caractérisé en ce que** l'arbre d'essuie-glace (30) présente une enveloppe (86) en un matériau non métallique, notamment en un matériau polymère, de préférence en matière plastique, et l'élément de positionnement (50) est fixé à l'enveloppe (86) de l'arbre d'essuie-glace (30) au moyen d'un soudage par ultrasons.
